# EUROPEAN PATENT APPLICATION

(11) **EP 1 172 998 A1**
(43) Date of publication of application: **16.01.2002**
(21) Application number: 01116216.1
(22) Date of filing: 04.07.2001
(51) Int. Cl.: H04N 1/00, H04N 1/23

(54) **Image-forming apparatus**

(30) Priority: 13.07.2000 JP 2000213197
(71) Applicant: Murata Kikai Kabushiki Kaisha, Minami-ku, Kyoto-shi, Kyoto (JP)
(72) Inventor: Hiraoka, Toru, Nagaokakyo-shi, Kyoto (JP)
(74) Representative: Liedl, Christine, Dipl.-Chem.

(57) **Abstract**

A low-cost image-forming apparatus capable of handling color image printing without reducing the performance of monochrome image printing. When the apparatus functions as a copier, a control unit (11) causes an image processing unit (13) to convert a color image scanned by a color image scanner unit (12) into a monochrome image when a monochrome image printout is selected by a color/monochrome switching key (18) of an operation unit (17), and causes a monochrome printer unit (14) to print out that image. When a color image printout is selected, a color image scanned by the color image scanner unit (12) is converted to transmission data corresponding to an external color printer (31) or (32), the data is transmitted to an external color printer via an external interface (23) or a LAN interface (24), and the color image is printed out. The price of the image-forming apparatus can be held low by providing only a monochrome printer unit (14), because color images are not printed out all that frequently.

## Description

The present invention relates to an image-forming apparatus comprising scanning means for scanning a color image.

For a long time, an image-forming apparatus which scans an image and prints out the image was only able to handle monochrome (black-and-white) images. However, in recent years, color scanners capable of scanning color images, color printers capable of printing color images and the like have been developed.

With regard to the color scanners thereamong, inexpensive machines have been developed, and their scanning speeds are on a par with those of black-and-white scanners. However, when it comes to color printers, at present, for systems capable of high-speed printing, the apparatus is large in size and extremely expensive, and for inexpensive models, due to the characteristics of the printing system thereof, printing takes an extremely long time.

When an image-forming apparatus is actually put to use, in most cases monochrome images are printed, and instances when color images are printed are not that numerous. As for image-forming apparatus comprising color scanners and color printers, due to the demand for high speed when printing a monochrome image, expensive color printers are provided. Thus, the price of such an image-forming apparatus is high. However, as mentioned hereinabove, color images are not actually printed all that often, and cost performance is anything but outstanding. Furthermore, low-cost color printers could also be provided, but the output performance of monochrome images would decline in that case, and when consideration is given to the fact that mostly monochrome images are printed out, the sacrificing of high speeds is unacceptable.

With the foregoing in view, it is an object of the present invention to provide a low-cost image-forming apparatus capable of also handling printouts of color images without causing a reduction in monochrome image printing performance.

According to one embodiment of the present invention, there is provided an image-forming apparatus having: a color image inputting unit for inputting a color image; a printer unit for printing out a monochrome image; an interface for enabling the connection of external color printer unit; and a control unit for determining whether a color image inputted via the color image inputting unit will be printed in black-and-white on the printer unit, or will be outputted as-is via the interface as a color image. For example, when an operation unit for selecting whether to print a monochrome image or to print a color image is provided, and the printing of a color image is selected by means of the operation unit, it is possible for the control unit to perform control such that a color image inputted via the color image inputting unit is outputted to a color printer via the interface.

In this manner, because the image-forming apparatus only has the printer unit for printing monochrome images, monochrome image printing performance is maintained, and the cost of the apparatus can be held in check. Furthermore, as for forming a color image, for example, if the image-forming apparatus is connected via the interface to an inexpensive color printer, a color image inputted via the color image inputting unit can be printed by an external color printer. Since color images are not printed all that frequently, color images can be adequately handled even with constitution like this. Furthermore, for users who do not form color images, the image-forming apparatus need not be connected to a color printer, and even if the apparatus is constituted to enable the image inputting unit to input color images, it will not lead to that much of an increase in price.

Furthermore, the image-forming apparatus can be constituted such that, when a color image is outputted via the interface and outputting is completed, a message, for example, to the effect that outputting has been completed is outputted. In accordance therewith, a user can be informed via the image-forming apparatus that the printing of a color image on an external color printer has been completed. Furthermore, when a plurality of external color printers are connected, by making the constitution such that there is outputted a message as to which color printer has performed the outputting, a user can be informed via the image-forming apparatus as to the color printer on which printing was performed.
Fig. 1 is a block diagram showing as a facsimile device an embodiment of the image-forming apparatus of the present invention;
Fig. 2 is a flowchart showing a copying operation in the facsimile device shown in Fig. 1; and
Fig. 3 is a block diagram showing another embodiment of the image-forming apparatus of the present invention.

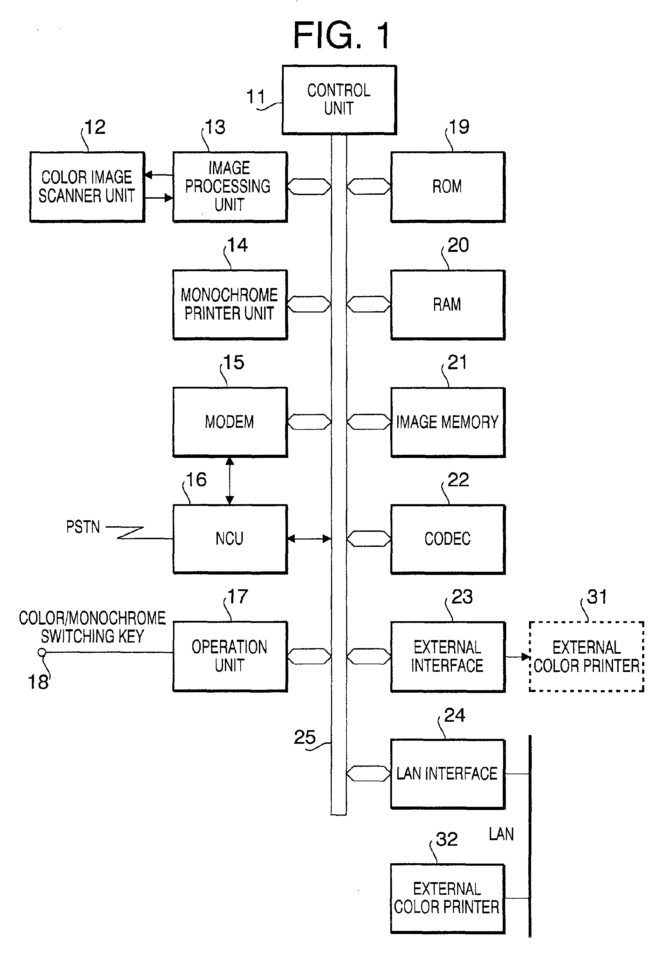

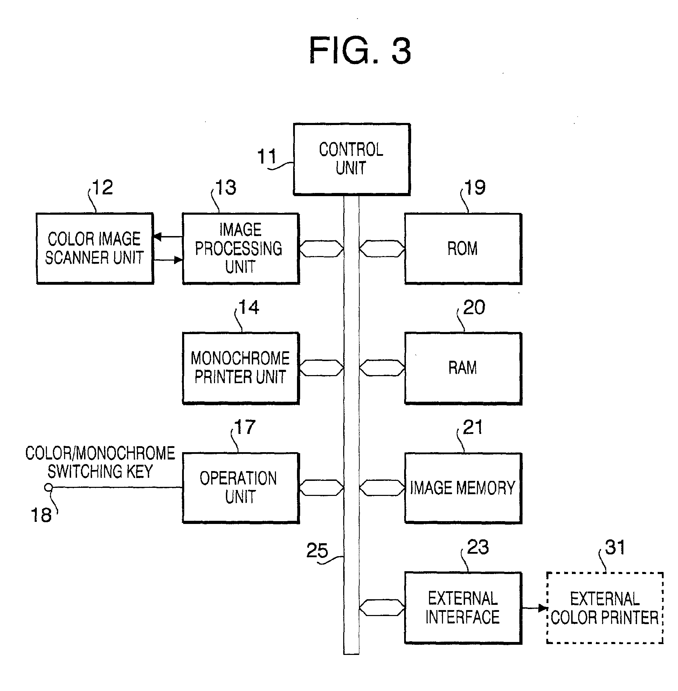

In Figs 1 and 3, reference number 11 designates a control unit, 12 a color image scanner unit, 13 an image processing unit, 14 a monochrome printer unit, 15 a modem, 16 an NCU (network control unit), 17 an operation unit, 18 a color/monochrome switching key, 19 ROM (read-only memory), 20 RAM (random access memory), 21 an image memory, 22 a codec (coder and decoder), 23 an external interface, 24 a LAN (local area network) interface, 25 a bus, and 31 and 32 external color printers.

The control unit 11 controls the entire apparatus, operating each unit, and realizing functions such as an image transmit-receive function, a copy function and so forth. Furthermore, the control unit 11 can exchange data with external equipment connected via the LAN interface 24, and can realize a scanner function using the color image scanner unit 12, and a printer function using either the monochrome printer unit 14 or a transmission function to the external color printers.

In particular, the control unit 11 determines whether a color image scanned by the color image scanner unit 12 in a copy function is printed in black and white on the monochrome printer unit 14, or outputted as a color image as-is via such an interface as the external interface 23 or the LAN interface 24. The switching thereof may, for example, be done either by the operation of the color/monochrome switching key 18 disposed on the operation unit 17, or by analyzing an image scanned by the color image scanner unit 12. Furthermore, when an image is printed on the monochrome printer unit 14, for example, a color image is converted to a monochrome image in the image processing unit 13. Of course, this conversion process may also be performed by the control unit 11, and when the monochrome printer unit 14 has a conversion function, the conversion process may also be performed by the monochrome printer unit 14. When an image scanned by the color image scanner unit 12 is stored in the image memory 21 one time and various processes are performed, conversion to a monochrome image by the image processing unit 13 enables more effective use of the image memory 21. Furthermore, when a color image is outputted as-is via the external interface 23 or the LAN interface 24, outputting can be performed by converting the image to an appropriate data format (for example, a page description language) corresponding to the output destination, the external color printer 31 or the external color printer 32.

The color image scanner unit 12 scans an image on an original (material which is to be scanned) as color image. As the color image scanner unit 12, a variety of image scanning devices such as an image scanner, or a digital camera can be utilized. Furthermore, the color image scanner unit 12 may be constituted so as to be switched via a user setting to either a color scan or a monochrome scan.

The image processing unit 13 performs various image processing on a color image scanned by the color image scanner unit 12. For example, the image processing unit 13 can perform processes such as gradation correction corresponding to the characteristics of the color image scanner unit 12. Furthermore, at copy function time, the image processing unit 13 can carry out image processing such that a high-resolution, high-gradation image is printed, and at facsimile transmission time, can perform resolution conversion in accordance with a transmission resolution or bi-level coding. Furthermore, when a monochrome copy is made, a color image can also be converted to a monochrome image by this image processing unit 13. After an image is processed by the image processing unit 13, the image can be stored in the image memory 21. Of course, image processing can be carried out, using the image memory 21, or an image can be transmitted to the monochrome printer unit 14, the external interface 23 or the LAN interface 24 without storing the image in the image memory 21.

The monochrome printer unit 14 is such that it prints images only in black and white, and is used when an image received via a facsimile or a color image scanned by the color image scanner unit 12 is printed in black and white. Of course, the monochrome printer unit 14 may print activity journal records and other such messages from the apparatus, and data and images received via a LAN. As the printing method, a variety of methods can be used, such as, for example, an electrophotography method, an ink-jet method, a heat transfer method or a thermal printing method. Furthermore, it is desirable that this monochrome printer unit 14 have some advantages at black-and-white printing, such as being faster, higher image quality and/or less running cost than the external color printers 31 and 32.

The NCU 16 controls lines, and carries out communications with external equipment. Furthermore, the modem 15 modulates and demodulates image data which is to be transmitted and received. Facsimile transmissions and receptions using the public switched telephone network (PSTN) are carried out using the NCU 16 and the modem 15.

The operation unit 17 displays via a display unit various information, such as messages for the user, messages showing a state of the apparatus and operation guidance, and, in addition, enables a user to make various settings and commands via an inputting unit. For instance, in this device, the color/monochrome switching key 18 is provided as the inputting unit, and by operating this key at copy function time, it is possible to select either the printing of a monochrome image from the monochrome printer unit 14, or the printing of a color image using either the external color printer 31 or the external color printer 32. Of course, by the inputting unit, it is also possible to perform a variety of inputs and settings in addition thereto, such as, for example, the switching between a copy function and a facsimile transmission function, or function execution commands. Furthermore, when printing is carried out by transferring a color image to either the external color printer 31 or the external color printer 32, for example, upon completion of this printing, it is possible to display, on the display unit, a message to that effect or on which external color printer outputting has been performed.

ROM 19 stores programs for specifying control unit 11 operations, fixed data and the like. RAM 20 is used when data needs to be retained for processing in the control unit 11 and other units.

The image memory 21 is capable of storing image data which is transmitted, received image data, images scanned by the color image scanner unit 12, images sent from other computers via the LAN interface 24, and other images and data which are being processed. When an image is stored, the image can either be stored as-is, or it can be stored in a compressed state.

The codec 22 compresses an image to be transmitted via the modem 15 and the NCU 16 in accordance with a prescribed compression method, and expands a compressed image received via the NCU 16 and the modem 15 in accordance with a prescribed expansion method. Furthermore, for sending and receiving compressed data via the LAN interface 24, the codec 22 can also be used for compressing and expanding the data. Furthermore, the compression or expansion processing performed by this codec 22 can also be performed by the control unit 11. Alternatively, the control unit 11 and the codec 22 can be used in combination to carry out compression processing and expansion processing.

The external interface 23 is an interface, which, for example, can be connected to the external color printer 31 and the like, and in this device, is capable of transmitting a color image to the external color printer 31. A variety of interfaces can be used as this external interface 23. For example, a parallel interface such as the IEEE 1284 (Centronics), a serial interface such as a USB (Universal Serial Bus) or IEEE 1394, a wireless interface (IRDA (Infrared Data Association), Bluetooth, etc.) which uses infrared rays or radio waves, and various other interfaces can be used. For example, as with a USB, a plurality of external color printers, together with other equipment, may be connected. Furthermore, the present invention may be constituted such that a plurality of interfaces such as these interfaces are provided.

The LAN interface 24 is connected to a LAN, and is capable of transmitting and receiving image data and other information via the LAN. In particular, the LAN interface 24 can allow the printing of a color image by transmitting a color image scanned by the color image scanner unit 12 to the external color printer 32 connected to the LAN. Furthermore, when the scan function is used, the LAN interface 24 can transmit image data scanned by the color image scanner unit 12 to an external computer or the like connected to the LAN. Moreover, when the printer function is used, the LAN interface 24 can also transmit image data received from an external computer either to the monochrome printer unit 14 or to an external color printer.

Additionally, the external interface 23 and the LAN interface 24 may either be used together as shown in Fig. 1, or the device may be constituted with only one of the two interfaces.

The bus 25 interconnects the control unit 11, the image processing unit 13, the monochrome printer unit 14, the modem 15, the NCU 16, the operation unit 17, the ROM 19, the RAM 20, the image memory 21, the codec 22, the external interface 23, the LAN interface 24 and the like, and makes it possible to transmit data among them. Of course, external storage and various other equipment may also be connected to the bus 25.

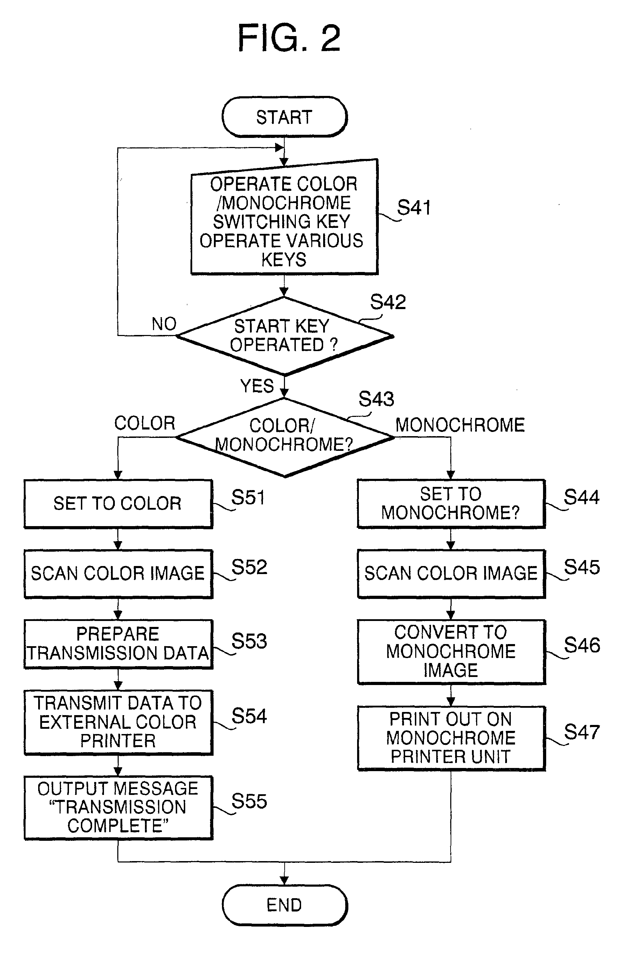

Next, the operation of, as a facsimile device, the facsimile device will be described. Fig. 2 is a flowchart showing a copy operation by the facsimile device. First, in S41, various settings for a copy operation are performed using the operation unit 17. Using the color/monochrome switching key 18, these settings include a selection as to whether to print a color image or to print a monochrome image.

In S42, a judgment is made as to whether a start key operation is completed, and the various settings in S41 are performed until the start key is operated. After performing the various settings, a copy function is started when operations for executing a copy function, such as the start key operation, are performed.

In S43, a judgment is made as to which of color image printing and monochrome image printing has been selected by the color/monochrome switching key 18. When monochrome image printing is selected, monochrome image printing is carried out by the monochrome printer unit 14 through processes S44 to S47. Furthermore, when color image printing is selected, color image output processing is carried out to either the external color printer 31 or the external color printer 32 through steps S51 to S55.

In S43, when it is judged that monochrome image printing has been selected by the color/monochrome switching key 18, in S44, monochrome image scan settings to the image processing unit 13 or the color image scanning unit 12 in addition to the unit 13 are performed. For example, a command for converting a color image to a monochrome image, the conversion parameters for conversion and the like can be set to the image processing unit 13.

Then, in S45, an image on an original (material which is to be scanned) set in the color image scanning unit 12 is scanned as a color image, and the scanned color image is converted to a monochrome image by the image processing unit 13 in S46. The resulting monochrome image is stored in the image memory 21, and, in addition, various processing (for example, electronic sorting, Nin1 processing and so forth) can be carried out. Of course, the monochrome image may also be sent directly to the monochrome printer unit 14. Then, in S47, the monochrome image is formed on printing paper by the monochrome printer unit 14, and processing for the copy function is completed. The monochrome image can be printed rapidly, because the monochrome printer unit 14 usually has hardware well suited to form monochrome images.

On the other hand, when it is judged in S43 that color image printing has been selected by the color/monochrome switching key 18, in S51, color image scan settings to the image processing unit 13 or the color image scanning unit 12 in addition to the unit 13 are performed. For example, appropriate parameters adapted to print a color image can be set to the image processing unit 13.

Then, in S52, an image on an original (material which is to be scanned) set in the color image scanner unit 12 is scanned as a color image, and in S53, transmission data corresponding to an external color printer which forms the color image thereof is prepared. Then, the prepared transmission data is transmitted to the external color printer in S54. For example, if this transmission data is sent to the external color printer 31, this transmission data may be transmitted via the external interface 23, and if it is sent to the external color printer 32, this transmission data may be transmitted via the LAN interface 24. In accordance therewith, the external color printer 31 or the external color printer 32 which has received the transmission data can form the color image on printing paper.

After transmitting the transmission data to the external color printer 31 or the external color printer 32, in S55, a message to the effect that the color image has been transmitted to the external color printer 31 or the external color printer 32 is communicated to the user by, for example, either being displayed on the display device of the operation unit 17, or being printed out from the monochrome printer unit 14. Alternatively, information to the effect that the transmission is completed can be transmitted and communicated to other network equipment connected to the LAN via the LAN interface 24 or to other network equipment connected via the Internet. At that time, in addition to directly transmitting the information of completing transmission, the notification information may also be transmitted as electronic mail, for example. Furthermore, it is also possible to make notification by voice via a telephone including a portable-typed telephone, to make notification by sending the notification information as an image to a facsimile device, or to make notification by transmitting the data to a portable terminal including a pager or a beeper, through a public switched telephone network including ISDN (integrated services digital network) lines or leased circuits. Of course, the information of completing transmission can also be communicated by various methods in addition thereto. Moreover, the notification destination is not limited to one location, but can be a plurality of locations, and in the case thereof, a plurality of notification methods can be used. Furthermore, at the time of making notification of completing transmission, it is preferable that an additional notification be made as to which of the external color printers the color image has been transmitted to.

When a color image is printed in this manner, color printing can be performed using an external color printer. Color images are printed out infrequently, so that using external color printers like this is not that inconvenient. As an external color printer, a low-speed, inexpensive printer suffices since an external color printer is not used all that frequently. Conversely, since a color printer is not provided inside the image-forming apparatus like this, the price of the image-forming apparatus can be held down.

Furthermore, in the operation described hereinabove, there is given switching as to which of monochrome printing and color printing is carried out for a copy function, but the device may be constituted such that it is possible to switch between performing monochrome printing on the monochrome printer unit 14 and performing color printing by using an external color printer in the same way when a color image is sent, for example, via color facsimile communications.

Furthermore, when an image which has been scanned by the color image scanner unit 12, using the scanner function, is transmitted to an external computer connected to the LAN, it is possible to use this facsimile device as a color scanner, since the color image scanner unit 12 is capable of scanning color images. Moreover, this facsimile device may be used as printer. In this case, it is possible not only to print an image transmitted from an external computer on the monochrome printer unit, but also to print a color image by transmitting the color image to the external color printer 31 via the external interface 23.

Fig. 3 is a block diagram showing another embodiment of the image-forming apparatus of the present invention. The embodiment shown in Fig. 1 applied the image-forming apparatus of the present invention to a facsimile device. However, the present invention is not limited to this embodiment, and, as shown in Fig. 3, for example, may be constituted as a copying machine which is not provided with an NCU 16 and a modem 15 (and a codec 22) and does not have communication functions. In Fig. 3, the device of the present invention is constituted further without an LAN interface 24. An external color printer is connected to the external interface 23.

Furthermore, a device of the present invention may also be constituted without an NCU 16, a modem 15, a codec 22, or even a color image scanner unit 12 as a monochrome print server for printing color images sent from an external computer via the external interface 23 or the LAN interface 24. In this case, when a color image is printed, this device may also be constituted so as to enable the external color printer 31 to be connected to the device. The present invention is not limited to the described and illustrated embodiments, and can be constituted in other various ways.

Furthermore, an external color printer can also be utilized as an alternative printer, for example, for when a malfunction occurs in the monochrome printer unit 14. In this case, of course, a monochrome printer can be connected to the external interface 23. Accordingly, it should be understood that I intend to cover by all appended claims all modifications falling within the true spirit and scope of the present invention.

## Claims

1. An image-forming apparatus comprising:
a color image inputting (12; 24; 15, 16) unit for inputting a color image;
a printer unit (14) for printing a monochrome image;
an interface (23, 24) to which an external color printer (31, 32) can be connected; and
a control unit (11) for determining whether a color image inputted from the color image inputting unit is printed on the printer unit as a monochrome image, or printed on the external color printer as a color image.

2. The image-forming apparatus according to claim 1, **characterized in that** the color image inputting unit includes a color image scanner unit (12) for scanning a color image, includes a LAN interface (24), or includes a network control unit (16) and a modem (15).

3. The image-forming apparatus according to claim 1 or 2, **characterized in that** the image-forming apparatus further includes an image conversion unit for converting an inputted color image to a monochrome image.

4. The image-forming apparatus according to claim 3, **characterized in that** the image-forming apparatus further includes an operation unit (17) for enabling the setting of parameters to the image conversion unit when a color image is converted to a monochrome image.

5. The image-forming apparatus according to claim 3, **characterized in that** the image conversion unit is included in the color image inputting unit or the printer unit (14).

6. The image-forming apparatus according to any one of claims 1, 2, 3, and 5, **characterized in that** the image-forming apparatus further includes an operation unit (17) for allowing a user to select whether an inputted image is printed in black and white, or printed in color, and that, based on input from the operation unit, the control unit (11) determines whether the image is printed on the printer unit (14), or printed on the external color printer (31, 32).

7. The image-forming apparatus according to any one of claims 1 to 5, **characterized in that** the control unit (11) judges whether an image inputted by the color image inputting unit is black-and-white or color,
and when the control unit judges the image is black-and-white, the control unit causes the image to be printed on the printer unit (14),
and when the control unit judges the image is color, the control unit causes the image to be printed on a color printer (31, 32) via the interface (23, 24).

8. The image-forming apparatus according to claim 1, **characterized in that** the image-forming apparatus further includes a message output unit for making notification to a user,
and the control unit (11) communicates to a user via the message output unit a message that printing on a color printer is completed.

9. The image-forming apparatus according to claim 8, **characterized in that** a plurality of color printers are connected to the apparatus, and the message includes information as to which color printer has performed the printing.

10. The image-forming apparatus according to claim 8 or 9, **characterized in that** the image-forming apparatus further includes a display unit for displaying the message.

11. The image-forming apparatus according to claim 8, 9, or 10, **characterized in that** the control unit (11) causes the message to be printed on the printer unit (14).

12. The image-forming apparatus according to claim 8 or 9, **characterized in that** the image-forming apparatus further includes a network control unit (16) capable of connecting the apparatus to a public switched telephone network, and the message is transmitted to a user through the public switched telephone network.

13. The image-forming apparatus according to claim 12, **characterized in that** the message is a voice message.

14. The image-forming apparatus according to claim 12, **characterized in that** the image-forming apparatus further includes a modem (15) which is connected to the network control unit (16), and the message is transmitted to a user by facsimile.

15. The image-forming apparatus according to claim 8 or 9, **characterized in that** the interface (23, 24) includes a LAN interface (24), and the massage is transmitted to a user through the LAN interface (24).

16. An image-forming apparatus comprising:
color image inputting means (12; 24; 15, 16) for inputting a color image;
printer means (14) for printing a monochrome image;
means (23, 32) for enabling an external color printer (31, 32) to be connected to the apparatus; and
control means (11) for determining whether the color image inputted from the color image inputting means is printed on the printer means as a monochrome image, or printed on the external color printer as a color image.

17. A method of forming an image, comprising the steps of :
(A) determining whether an image is printed in color or in black and white;
(B) printing the image in color on an external color printer (31, 32), when the determination that the image should be printed in color has been made in Step (A); and
(C) printing the image in black and white on an inside printer (14), when the determination that the image should be printed in black and white has been made in Step (A).
